# DEMANDE DE BREVET EUROPEEN

(11) **EP 0 864 706 A1**
(43) Date de publication de la demande: **16.09.1998**
(21) Numéro de dépôt: 98460002.3
(22) Date de dépôt: 11.02.1998
(51) Int. Cl.: E04D 1/34, F16B 15/08

(54) **Conditionnement de crochets de couverture**

(30) Priorité: 13.02.1997 FR 9701917
(71) Demandeur: Gregnic, Georges, 56100 Lorient (FR)
(72) Inventeur: Gregnic, Georges, 56100 Lorient (FR)
(74) Mandataire: Ballot, Paul

(57) **Abrégé**

L'invention consiste en une mise en lots comprenant chacun une pluralité de crochets (C) alignés les uns contre les autres, et assujettis ainsi par une attache ou clip (5).

Celui-ci retient les crochets (C) du lot d'une façon telle que lorsque le lot est positionné dan une main prêt à l'usage, il puisse être libéré desdits crochets (C) par simple traction ou pression entre deux doigts, et/ou déplacement relatif entre crochets du lot, afin que cette opération d'éjection du clip soit aisée malgré que l'autre main ait à tenir un marteau dans le même temps.

## Description

La présente invention concerne le conditionnement de crochets de couverture.

On sait que, pour la fixation des ardoises ou bardeaux des toitures ou des bardages, on utilise des crochets.

Dans une première forme, les crochets comportent une première extrémité en pointe, laquelle est piquée dans la volige.

Dans une seconde forme de crochets, cette première extrémité forme une agrafe qui se pince sur des liteaux montés parallèles. Dans les deux versions, les crochets ont une même seconde extrémité à l'opposé de la pointe ou agrafe, qui forme la pince de retenue de l'élément de couverture, ardoise ou bardeau.

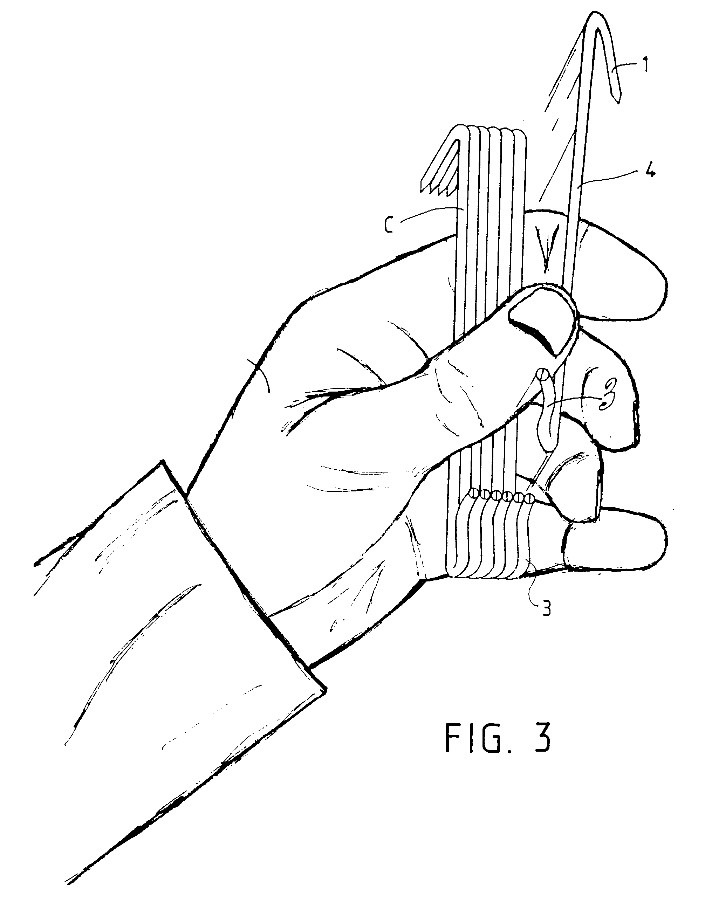

Ces crochets sont actuellement et depuis toujours disposés en vrac dans leur conditionnement (boîte en bois). Lors de leur emploi, le couvreur doit les démêler les uns des autres, et les placer côte à côte dans la main opposée à celle tenant le marteau, de la façon illustrée à la Fig. 3 des dessins joints.

C'est là une opération fastidieuse et longue, et de ce fait onéreuse car elle allonge considérablement le temps de pose.

La présente invention résulte de la recherche d'une solution efficace et simple à ce problème, consistant en un conditionnement des crochets ordonné en vue de faciliter leur préhension et leur ordonnancement en nombre dans la main.

L'invention est donc un système de conditionnement de crochets de couverture, caractérisé en ce qu'il consiste en une mise en lots comprenant chacun une pluralité de crochets alignés les uns contre les autres, et assujettis ainsi par une attache ou clip, lequel retient les crochets du lot d'une façon telle que lorsque le lot est positionné dans une main prêt à l'usage, il puisse être libéré desdits crochets par simple traction ou pression entre deux doigts, et/ou déplacement relatif entre crochets dudit lot, afin que cette opération de séparation dudit clip d'avec les crochets soit aisée malgré que l'autre main ait à tenir un marteau dans le même temps.

Selon l'invention, il a été développé plusieurs versions dudit clip, fabriqué en une matière plastique déformable élastiquement telle que polyéthylène, polypropylène, polystyrène, etc. Des première et seconde versions ont été conçues pour coopérer avec l'extrémité des crochets formant pince pour les éléments de couverture. Une troisième version coopère avec la tige des crochets.

Dans la première version précitée, le clip a la forme d'un petit boîtier destiné à recevoir la partie formant pince des crochets en en épousant le contour. Le clip se sépare des crochets par traction dans le sens de leur longueur et/ou par déplacement relatif en ciseaux, dans le sens de l'épaisseur du clip, d'au moins deux des crochets du lot.

Dans la seconde version, ledit clip présente une barrette profilée qui est insérée à l'intérieur de la pince des crochets, et qui s'extrait par traction dans le sens de leur longueur.

Enfin, dans la troisième version précitée, le clip est une barrette le long de laquelle font saillie une pluralité de pattes retenant entre elles les tiges desdits crochets, et qui s'ouvrent par flexion de ladite barrette sous l'effet d'une pression exercée à ses deux extrémités.

Lorsqu'il utilise des crochets conditionnés conformément à l'invention, le couvreur n'a plus à démêler ceux-ci un à un dans leur boîte pour les placer en main. Grâce au clip, il effectue cette opération d'un geste, en éjectant le clip par effet mécanique (déformation élastique) ou par traction entre deux doigts, façon tiroir.

Ce geste, qu'il convient de dénommer pioche, n'impose nullement de se défaire du marteau pour être accompli, ce qui est obligatoire pour la prise des crochets en vrac nécessitant un démêlage. De même sont supprimés grâce au clip tous ces autres gestes parasites si fréquents consistant en une prise supplémentaire durant une phase de pose si le nombre de crochets saisis d'abord était insuffisant, ou en la repose des crochets en trop dans le cas inverse.

Les caractéristiques et avantages de l'invention mentionnés ci-dessus, ainsi que d'autres, apparaîtront plus clairement dans la description suivante, faite en relation avec les dessins joints, dans lesquels :
la Fig. 1 est une vue en perspective montrant une pluralité de crochets à pointe alignés côte à côte ;
la Fig. 2 est une vue similaire à la Fig. 1 d'une pluralité de crochets à agrafe rassemblés en un lot conformément à l'invention au moyen d'un clip ;
la Fig. 3 est une vue illustrant schématiquement l'ordonnancement en main d'une pluralité de crochets, tel qu'il est pratiqué communément par les couvreurs ;
la Fig. 4 est une vue frontale d'un lot de crochets à pointe assemblés avec un clip tel que représenté à la Fig. 2 ;
la Fig. 5 est une vue en coupe selon la ligne V-V de la Fig. 4,
les Figs. 6a et 6b sont des vues en coupe horizontale selon la ligne VI-VI de la Fig. 4, qui ne sont différentes l'une de l'autre que sur un point de détail dans la conception de l'intérieur du clip ;
les Figs. 7 et 8 sont des vues en perspective illustrant deux façons pratiques d'extraire de son lot le clip représenté dans les figures précédentes ;
la Fig. 9 est une vue en perspective d'un lot de crochets à agrafe assemblés avec un second clip selon l'invention ;
la Fig. 10 est une vue schématique représentant une section droite dudit second clip ;
la Fig. 11 est une vue en perspective dudit second clip ;
la Fig. 12 est une vue en perspective illustrant une façon pratique d'extraire de son lot ledit second clip ;
la Fig. 13 est une vue en perspective d'un lot de crochets à agrafe assemblés avec un troisième clip selon l'invention ;
la Fig. 14 est une vue schématique en coupe horizontale dudit troisième clip , et
la Fig. 15 est une vue similaire à la Fig. 14, représant ledit troisième clip en plan, et illustrant une façon pratique de le séparer de son lot de crochets.

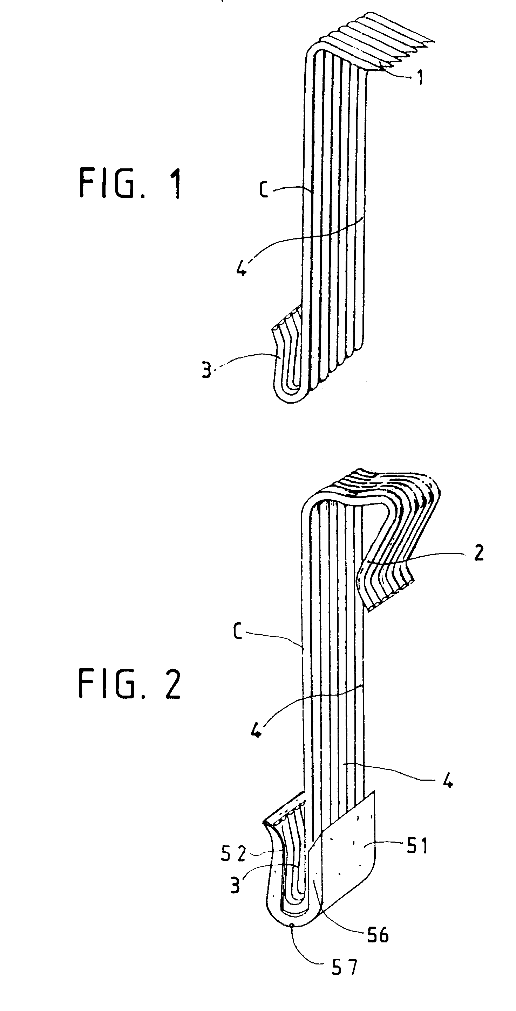

Considérant d'abord les Figs. 1 à 3, elles représentent chacune une pluralité de crochets C convenablement disposés entre eux, à savoir alignés les uns contre les autres, pour correspondre à l'ordonnancement en main, Fig. 3, tel qu'il est communément pratiqué par les couvreurs.

Les crochets C de la Fig. 1 et de la Fig. 2 ont en commun leur tige 4 et leur pince d'extrémité 3 destinée à la retenue des éléments de couverture. Ils ne diffèrent que par leur autre extrémité qui, à la Fig. 1 est une pointe 1, et à la Fig. 2 une agrafe 2.

Partant de cette première constatation, les clips selon l'invention destinés à l'assemblage des crochets d'un même lot comme à la Fig. 2, ont été conçus pour opérer de préférence au niveau des parties 3 ou 4 qu'ont en commun les deux types de crochet. Et bien qu'ils aient été représentés dans les dessins pour des lots de sept crochets, ce nombre est bien entendu susceptible de varier.

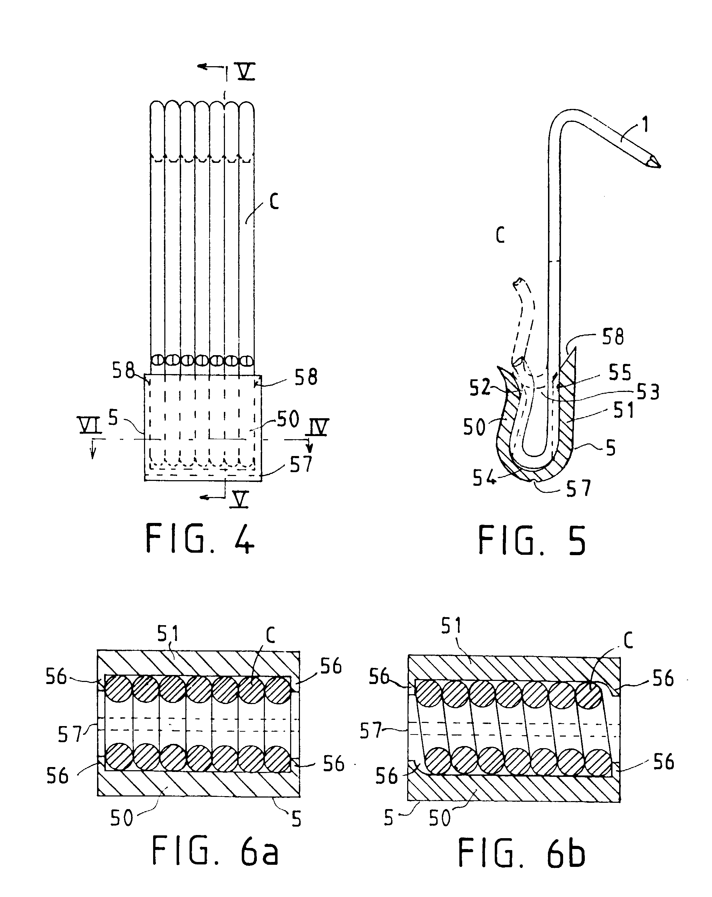

Dans la forme de réalisation des Figs. 2 et 4 à 8, le clip selon l'invention, désigné par le repère 5, est un petit boîtier, ouvert supérieurement et à ses extrémités, dans lequel s'insère intimement la partie pince 3 des crochets C. Il a un profil en U, ou plus précisément en forme de lyre, avec un dos 51, Fig. 5, plus élevé que son front 50, lequel est recourbé pour former en 52, avec le dos 51 un resserrement 53 qui viendra en correspondance avec la partie resserrée de la pince 3 des crochets. La forme exacte du profil intérieur du clip est définie de manière à épouser de façon appropriée celle de la partie pince du crochet de destination. En fond de clip, il est préférable de prévoir un léger jeu 54 pour permettre l'absorption des petits défauts de cintrage au niveau de la pince 3 des crochets.

A l'état non chargé, le resserrement 53 du clip 5 est sous-dimensionné, avantageusement d'environ 5% par rapport au resserrement correspondant de la partie 3 des crochets, pour assurer un blocage élastique de ceux-ci. De préférence, une nervure ou bourrelet 55 est prévu au niveau du resserrement 53 sur la paroi interne du dos 51, qui permet de compenser les petits défauts d'alignement éventuels.

Le blocage latéral du lot de crochet dans le clip 5 est assuré par des retours d'extrémité 56, Figs. 6a et 6b, prolongeant le dos 51 et le front 50 du clip, et qui peuvent être interrompus ou non le long du fond. Entre les retours 56 des deux extrémités, les crochets peuvent être retenus sans jeu, Fig. 6a, ou bénéficier d'un petit espace en excès leur permettant de prendre une position biaise, Fig. 6b.

D'autre part, le fond du clip 5 peut comporter intérieurement ou extérieurement une zone de moindre épaisseur, par exemple sous la forme de la rainure 57, au niveau de laquelle le clip va se rompre lorsqu'il est sollicité en ouverture en vue de son éjection.

On notera également que les bords supérieurs des parois du clip forment des biseaux 58, ou arrondis, en vue de favoriser l'introduction des crochets.

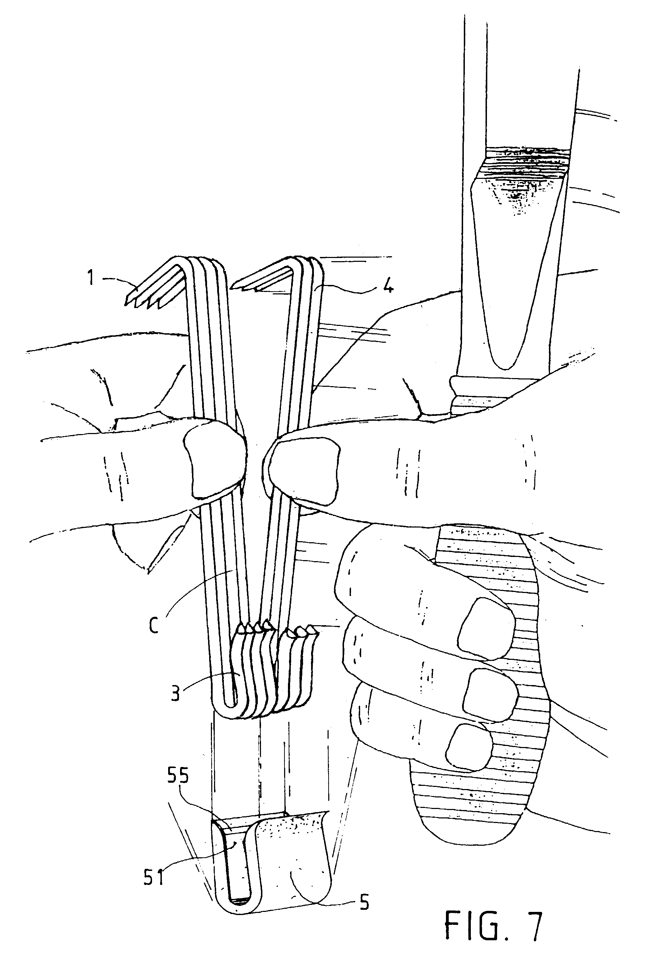

La Fig. 7 illustre une première façon d'extraire le clip 5 d'un lot de crochets, après que l'utilisateur, marteau en main, a effectué une pioche avec l'autre main. En s'aidant de la main tenant le marteau, il crée un déplacement en ciseaux entre deux groupes de crochets du lot, ce qui a pour effet d'écarter le clip, avec rupture éventuelle, et de l'éjecter vers le bas. L'utilisateur n'a plus alors qu'à réaligner les deux groupes de crochets et à placer le lot en main, comme à la Fig. 3, pour commencer la pose.

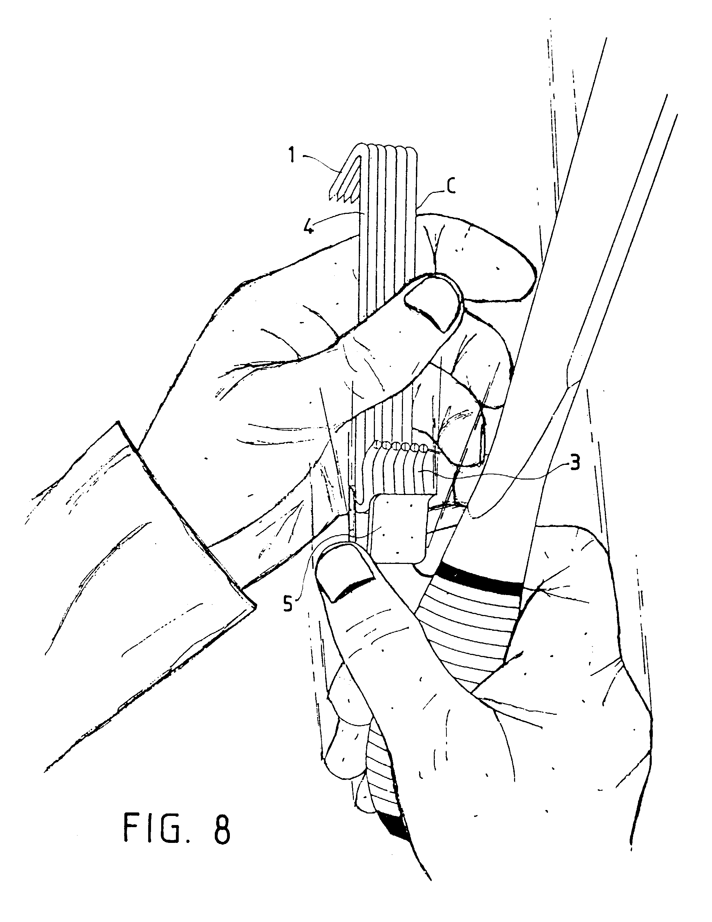

La Fig. 8 illustre une autre façon d'extraire le clip 5, par traction entre deux doigts de la main tenant le marteau.

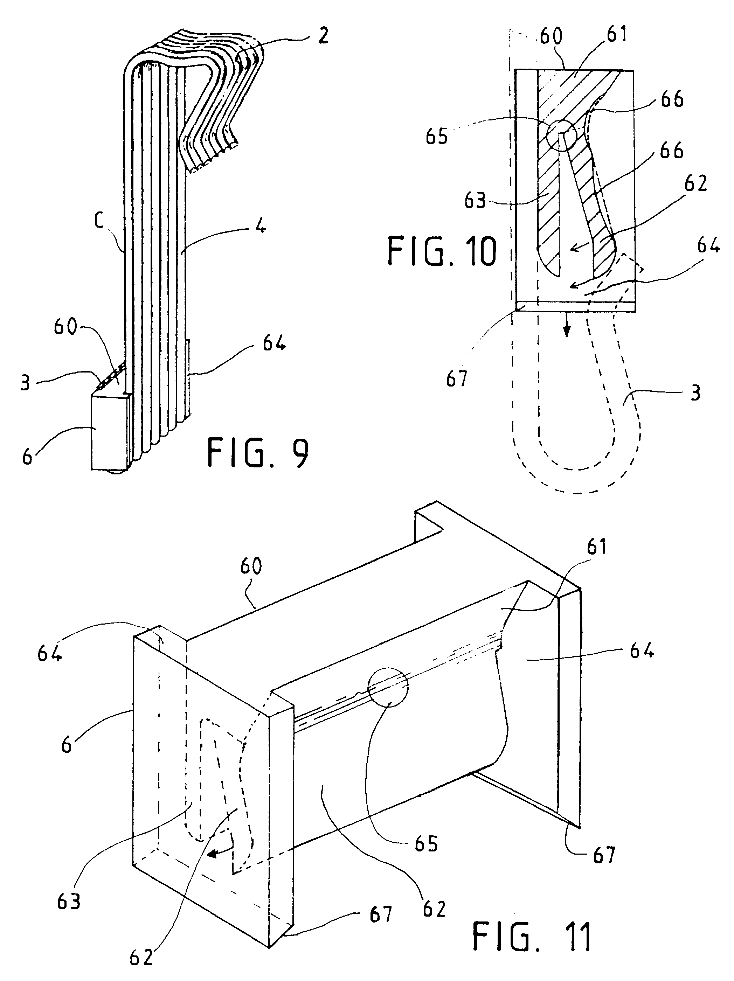

Une deuxième forme de réalisation de clip selon l'invention est illustrée aux Figs. 9 à 12. Ce clip 6 est pour l'essentiel une barrette qui s'insère dans la partie pince 3 des crochets C, avec l'avantage de n'induire quasiment pas d'augmentation d'encombrement.

Comme on peut le voir plus clairement à la Fig. 11, le clip 6 comprend un corps transversal ou barrette 60 bordé de chaque côté par des flancs 64 destinés à assurer le blocage latéral des crochets en formant des butées ou retours avant et arrière.

La barrette 60, dont le profil est complémentaire de celui de l'intérieur de la partie pince 3 des crochets, comporte une partie supérieure 61 qui se prolonge vers le bas en deux parties, soit une languette frontale 62 et un dos vertical 63. Ce dernier, avec la partie supérieure 61, sont joints par leurs extrémités latérale avec les flancs 64, tandis qu'à l'inverse, la languette 62 en est légèrement écartée de chaque côté, de manière à avoir une capacité de pivotement élastique autour de sa zone de jonction 65 avec la partie supérieure 61, laquelle zone 65 peut être fragilisée à cet effet, par réduction d'épaisseur. Bien entendu, lorsque le clip est inséré dans un lot, la languette 62 est resserrée élastiquement vers le dos 63 par rapport à sa position initiale.

Les bords inférieurs des parties 62 et 63, respectivement, forment des arrondis conformément au profil du fond de la partie pince 3 des crochets, d'une part, et en vue d'autre part de faciliter la mise en place du clip. Dans ce même but, les bords inférieurs 67 des flancs 64 ont une découpe en biseau.

Le profil de la partie supérieure 61 s'évase vers le haut pour remplir intimement le vide correspondant de la partie pince 3 des crochets, en formant une cale qui empêche ces derniers de se désaligner en ciseaux.

La surface extérieure de la languette frontale 62, ainsi que celle en prolongement de la partie supérieure 61, présentent avantageusement une ou plusieurs zones de portée réduite 66, Fig. 10, qui garantissent un meilleur contact avec la partie pince 3, au vu des légères variations de cintrage du fil des crochets.

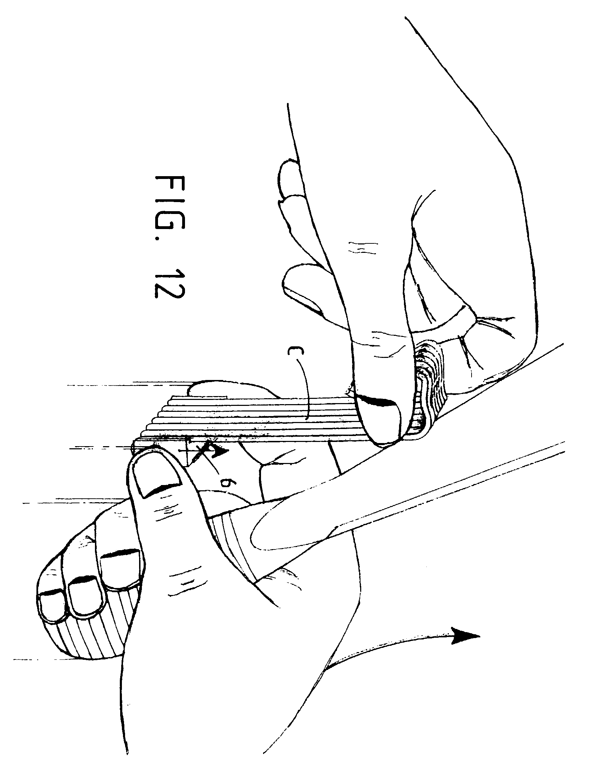

la Fig. 12 illustre l'extraction de son lot d'un clip 6, par traction vers le haut entre deux doigts tenant un marteau, c'est-à-dire d'une même façon qu'explicitée en référence à la Fig. 8 à propos du clip 5.

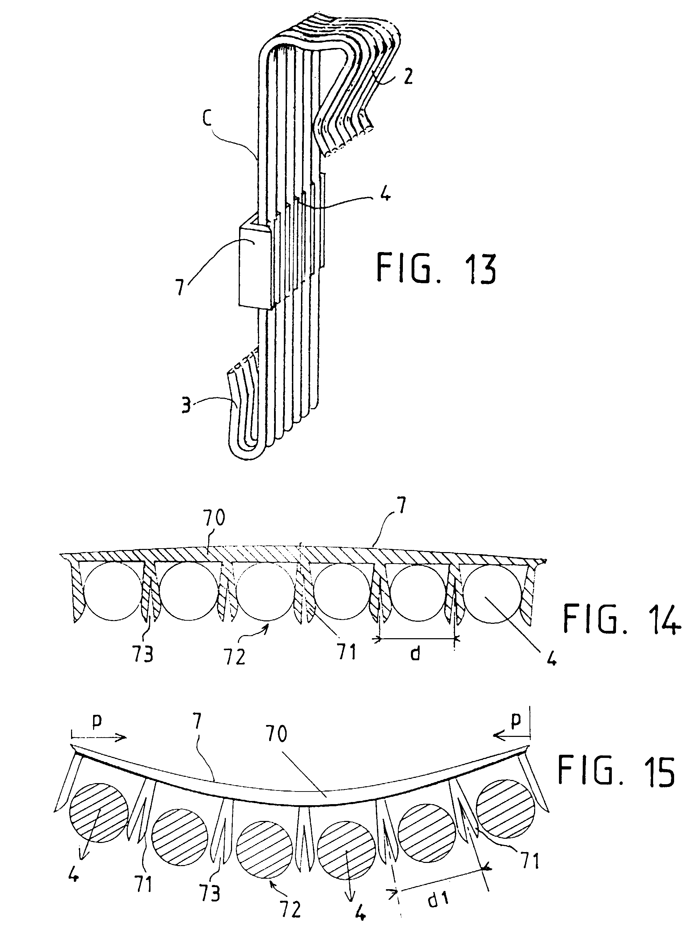

Le troisième clip 7 selon l'invention représenté dans les dessins, aux Figs. 13 à 15, retient les crochets C au niveau de leur tige 4. Il comporte une barrette 70, en devant de laquelle saillent perpendiculairement une pluralité de pattes 71 également écartées les unes des autres d'une distance d, Fig. 14, pour former entre elles et avec la barrette des alvéoles individuelles 72 de réception de crochet.

Comme le montrent les Figs. 14 et 15, les pattes 71 ont un profil dont la largeur augmente progressivement de leur base vers leur extrémité libre, et symétriquement des deux côtés (hormis celles d'extrémité qui se présentent en fait comme des demi-pattes), de manière à former un resserrement d'entrée des alvéoles 72 assurant le blocage des crochets.
Avantageusement, chaque patte 71 (hormis encore celles d'extrémité) est fendue en 73 à partir de son extrémité libre, dans le sens de la longueur des crochets, pour accroître sa capacité élastique par rapport à l'une et l'autre des deux alvéoles qu'elle borde. De plus l'extrémité libre de chaque patte 71 est biseautée ou arrondie pour faciliter l'insertion des crochets.

La Fig. 15 illustre le fonctionnement du clip 7 lors de la libération des crochets, à savoir que les alvéoles 72 sont ouvertes pour laisser le libre passage au crochets par flexion de la barrette 70, résultant d'une pression p aux deux extrémités, entre deux doigts. On voit sur le dessin que symétriquement de chaque côté du centre, le profil de la barrette 70 est évolutif en épaisseur, afin d'obtenir une courbure de flexion régulière d'une extrémité à l'autre, et par conséquent une même ouverture dl de l'ensemble des alvéoles.

En pratique, la séparation du clip 7 d'avec les crochets de son lot est aussi aisée et s'opère sensiblement de la même façon que précédemment décrite pour les clips 5 et 6, en référence respectivement aux Fig. 8 et 12.

## Revendications

1. Système de conditionnement de crochets de couverture (C), caractérisé en ce qu'il consiste en une mise en lots comprenant chacun une pluralité de crochets (C) alignés les uns contre les autres, et assujettis ainsi par une attache ou clip (5, 6 ou 7), lequel retient les crochets du lot d'une façon telle que lorsque le lot est positionné dans une main prêt à l'usage, il puisse être libéré desdits crochets (C) par simple traction ou pression entre deux doigts, et/ou déplacement relatif entre crochets dudit lot, afin que cette opération de séparation dudit clip (5, 6 ou 7) d'avec les crochets (C) soit aisée malgré que l'autre main ait à tenir un marteau dans le même temps.

2. Clip destiné à un système de conditionnement selon la revendication 1, caractérisé en ce qu'il consiste en un boîtier (5) destiné à recevoir la partie formant pince (3) de crochets (C) en en épousant le profil, le clip (5) se séparant de son lot de crochets (C) par traction dans le sens de leur longueur et/ou déplacement relatif en ciseaux dans le sens de l'épaisseur du clip d'au moins deux des crochets du lot.

3. Clip selon la revendication 2, caractérisé en ce qu'il a un profil en forme de lyre, avec un front (50) et un dos (51) formant un resserrement (53) destiné à venir en correspondance avec la partie resserrée de la pince (3) des crochets (C), des retours latéraux d'extrémité (56) prolongeant de chaque côté le front (50) et le dos (51) pour assurer le blocage latéral des crochets (C).

4. Clip selon la revendication 3, caractérisé en ce que son fond présente une zone de moindre épaisseur (57) en vue de sa rupture lorsqu'il est sollicité en ouverture pour être éjecté de son lot de crochets.

5. Clip selon la revendication 3 ou 4, caractérisé en ce que le dos (51) présente intérieurement une nervure ou bourrelet au niveau dudit resserrement (53).

6. Clip destiné à un système de conditionnement selon la revendication 1, caractérisé en ce qu'il comprend une barrette profilée (60) qui s'insère dans la partie formant pince (3) de crochets (C), le clip (6) s'extrayant de son lot de crochets (C) par traction dans le sens de la longueur de ces derniers.

7. Clip selon la revendication 6, caractérisé en ce qu'il comprend des flancs (64) de chaque côté de la barrette (60), assurant le blocage latéral des crochets (C).

8. Clip selon la revendication 6 ou 7, caractérisé en ce que ladite barrette (60) comprend une partie supérieure (61) se prolongeant vers le bas par une languette frontale (62) et un dos (63), lequel avec la partie supérieure (61) sont joints par leurs extrémités aux flancs (64), tandis que la languette (62) en est légèrement écartée de chaque côté, afin d'avoir une capacité de pivotement élastique autour de sa zone de jonction (65) avec la partie supérieure (61).

9. Clip destiné à un système de conditionnement selon la revendication 1, caractérisé en ce qu'il comprend une barrette (70) le long de laquelle font saillie une pluralité de pattes (71) pour définir une pluralité d'alvéoles (72) de réception de la tige (4) de crochets (C), qui s'ouvrent par flexion de la barrette (70) sous l'effet d'une pression exercée à ses deux extrémités.

10. Clip selon la revendication 9, caractérisé en ce que les pattes (71) présentent des fentes (73) à partir de leur extrémité, destinées à accroître leur capacité élastique par rapport à l'une et l'autre des alvéoles (72) qu'elles bordent.

11. Clip selon la revendication 9 ou 10, caractérisé en ce que ladite barrette (70) a un profil symétriquement évolutif en épaisseur de chaque côté de son centre, en vue d'obtenir à la flexion une courbure de ladite barrette régulière d'une extrémité à l'autre, et par conséquent une même ouverture des alvéoles (72).

12. Clip selon l'une des revendications 2 à 11, caractérisé en ce qu'il présente des biseaux (58, 67) et/ou arrondis pour faciliter sa mise en place sur les crochets.
